# EUROPÄISCHE PATENTSCHRIFT

(11) **EP 0 826 577 B1**
(45) Veröffentlichungstag und Bekanntmachung des Hinweises auf die Patenterteilung: **21.09.2005**
(21) Anmeldenummer: 97110198.5
(22) Anmeldetag: 21.06.1997
(51) Int. Cl.: B60J 7/10, B62D 47/00

(54) **Lösbar befestigter Heckaufsatz für ein Kraftfahrzeug**
Releasable attachable rear accessory cowl for a motor vehicle
Capot accessoire arrière pour véhicule automobile, fixé de façon détachable

(30) Priorität: 29.08.1996 DE 19636316
(43) Veröffentlichungstag der Anmeldung: 04.03.1998
(73) Patentinhaber: Dr.Ing.h.c. F. Porsche Aktiengesellschaft, 70435 Stuttgart (DE)
(72) Erfinder: Lehmann, Klaus-Peter, 75417 Mühlacker (DE); Schmid, Markus, 71297 Mönsheim (DE)

(56) Entgegenhaltungen:
- US-A- 4 890 876
- US-A- 5 489 146

## Beschreibung

Die Erfindung bezieht sich auf einen lösbar befestigten Heckaufsatz nach dem Oberbegriff des Anspruchs 1.

Aus der DE 85 23 831 U1 ist ein Fahrzeug mit einem Heckaufsatz bekannt, der zwei hinter den Vordersitzen angeordnete Hutzen aufweist und der Heckaufsatz einteilig ausgeführt ist. Aus der US-A-4,890,876 ist als nächster Stand der Technik ein lösbar befestigbarer Heckaufsatz für ein Kraftfahrzeug bekannt, der zweiteilig ausgeführt und über Scharniere zusammenklappbar ist. Jedes Teil des Heckaufsatzes weist eine hinter dem Fahrer und Beifahrersitz angeordnete und quer zum Fahrzeug verlaufende hochgestellte Fläche auf, an die sich ein ins Heck des Fahrzeugs verlaufender und im Querschnitt trapezförmiger Körper anschließt. Über Verbindungsmittel ist dieser Heckaufsatz mit dem Fahrzeugaufbau verbunden. Ferner ist aus der US-A-5,489,146 ein Hardtop für ein Cabrioletfahrzeug bekannt, das über Hakenelemente mit dem Fahrzeug verbindbar ist.

Die Aufgabe der Erfindung besteht darin, einen Heckaufsatz zu schaffen, der am Fahrzeugaufbau lösbar zu befestigen und der raumsparend im Fahrzeug zu transportieren ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß der Heckaufsatz in zwei Hutzenelemente aufgeteilt werden kann und jedes Hutzenelement einzeln im Fahrzeug verstaubar ist. Durch die Teilung wird eine platzsparende Transportmöglichkeit des Heckaufsatzes möglich, da die Elemente verteilt je nach vorhandenem Raum im Fahrzeug bzw. im Kofferraum unterbringbar sind. Vorzugsweise erfolgt die Unterbringung im rückwärtigen Kofferraum.

In einer Gebrauchsstellung sind die beiden Hutzenelemente des Heckaufsatzes an ihren Mittenlängskanten über Einhakelemente in Form von Leisten miteinander verbindbar. Eine Befestigung am Fahrzeug erfolgt vorzugsweise über eine Einschubleiste oder Einschubleistenstücke, welche einen Randbereich einer Heckausschnittskante klemmend zwischen sich aufnimmt. Vordere seitliche Abschnitte des Heckaufsatzes sind beispielsweise über am Fahrzeug vorhandene Befestigungseemente für ein Hardtop mit dem Fahrzeugaufbau verbunden.

In einer Transportstellung wird der Heckaufsatz mit den zwei Hutzenelementen vom Fahrzeug in der Weise abgebaut, daß die seitlichen Befestigungen zuerst vom Fahrzeug gelöst werden und dann der Aufsatz aus dem Heckausschnitt herausgezogen wird und danach die beiden Hutzenelemente voneinander getrennt werden, indem die Einhakelemente voneinander gelöst werden. Vorzugsweise werden die Hutzenelemente einzeln abgenommen.

Vorzugsweise besteht auch die Möglichkeit der Verwendung nur eines Hutzenelementes am Fahrzeug in einer Gebrauchsstellung, wobei das weitere Hutzenelement im Fahrzeug verstaut wird. Der Raum ohne Hutzenelement kann mit einer entsprechenden Abdeckung versehen werden.

Ein Ausführungsbeispiel der Erfindung ist in der Zeichnung dargestellt und wird im folgenden näher beschrieben.

Es zeigen
- Fig. 1: eine Draufsicht auf ein Heck eines Kraftfahrzeuges im Schema mit in Gebrauchssstellung angeordnetem Heckaufsatz mit zwei Hutzenelementen,

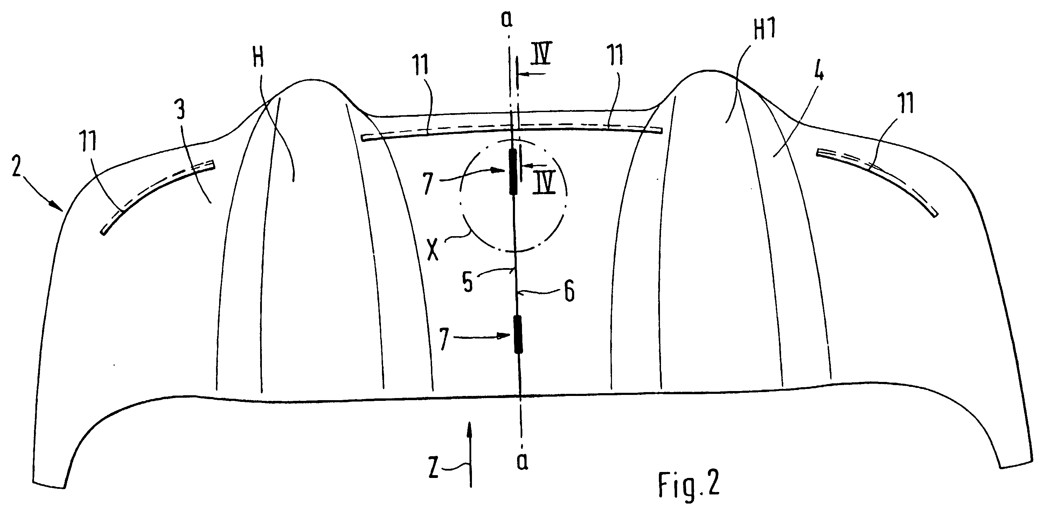

- Fig. 2: eine Draufsicht auf den Heckaufsatz mit angedeuteten Einhakelementen und Einschubleisten,

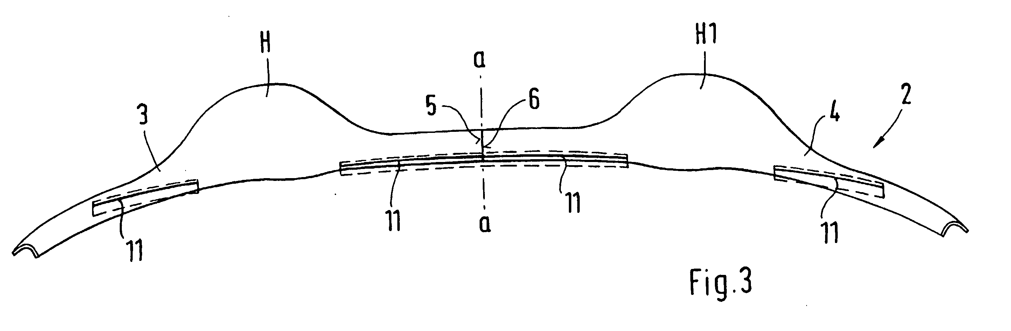

- Fig. 3: eine Ansicht auf den Heckaufsatz in Fahrtrichtung Z gesehen,
- Fig. 4: einen Schnitt durch die Einschubleiste nach der Linie IV-IV der Fig, 2,
- Fig. 5: eine vergrößerte Einzelheit X des Einhakelements nach Fig. 2 und
- Fig. 6: eine Darstellung einer Verbindung zwischen dem Heckaufsatz und dem Fahrzeugaufbau über eine Befestigung, vorzugsweise einer Hardtopbefestigung.

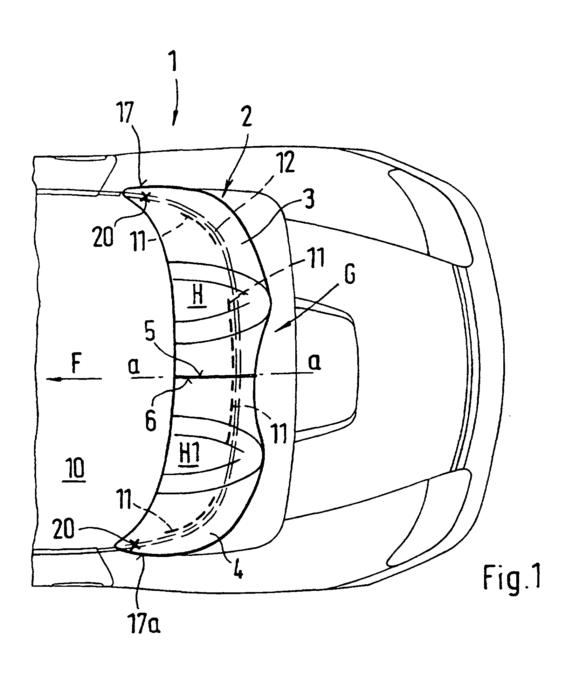

Ein Fahrzeug 1 weist hinter Vordersitzen einen Heckaufsatz 2 auf, der zwei Hutzenelemente 3 und 4 umfaßt, welche in der Längsmittenebene a-a lösbar miteinander verbunden sind. Der Heckaufsatz 2 ist in einer Gebrauchsstellung G (Fig. 1) einteilig und in einer Transportstellung in zwei Hutzenelemente 3 und 4 geteilt, was nicht dargestellt ist.

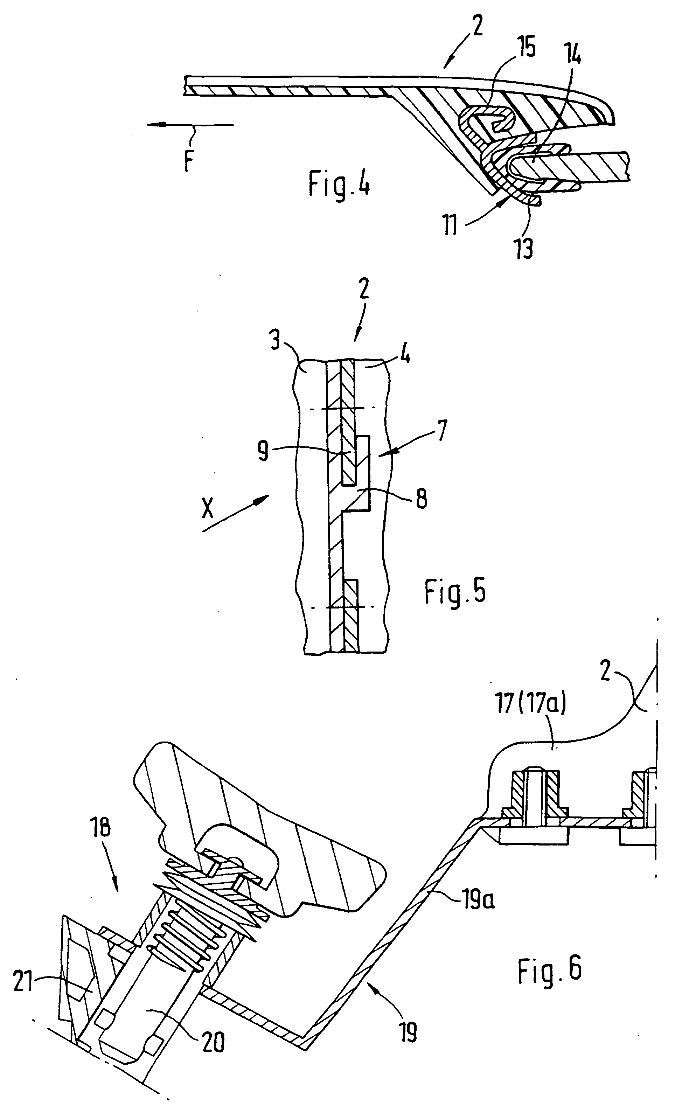

Zur lösbaren Verbindung der Hutzenelemente 3 und 4 weisen diese an ihren Trennungskanten 5 und 6 mindestens eine Einhakverbindung 7 auf, die in Fig. 5 vergrößert dargestellt ist. Diese umfaßt im Abstand angeordnete Hakenelemente in Form von U-förmigen Hakenleisten 8 des einen Hutzenelements 3 und ein Einhakleisten 9 am weiteren Hutzenelement 4, die im Querschnitt rechteckförmig ausgebildet ist.

Der Heckaufsatz 2 weist zum Verbinden mit dem Fahrzeugaufbau, insbesondere zum Einsetzen in einen Heckausschnitt 10 des Fahrzeugs Einschubleisten 11 auf, die abschnittsweise vorgesehen sind. Diese Einschubleisten 11 sind einer Heckausschnittskante 12 des Fahrzeugs zugewandt.

Die Einschubleiste 11 umfaßt eine im Querschnitt U-profilförmige Aufnahmerinne 13, in welche der Rand 14 der Heckausschnittkante 12 eingreift und klemmend von der Leiste 11 aufgenommen wird.

Wie in Fig. 4 näher gezeigt, ist die Einschubleiste 11 noch mit einer hakenförmigen Anformung 15 versehen, die nur zur Haltung im Hutzenelement beim Einschäumen dient.

Die Einschubleisten 11 sind abschnittsweise zwischen den Hutzen H und H1 vorgesehen, so daß eine sichere Befestigung des Heckaufsatzes 2 am Fahrzeugaufbau, insbesondere im Heckausschnitt, gewährleistet ist.

An den Seitenteilen 17, 17a jedes Hutzenelements 3, 4 sind Einrichtungen vorgesehen, die eine lösbare Befestigung des Heckaufsatzes 2 mit dem Fahrzeugaufbau über eine vorhandene Befestigungseinrichtung 18 für ein Hardtop ermöglichen. Hierzu weist der Heckaufsatz 2 jeweils eine Haltevorrichtung 19 auf, die mit einem spann-bzw. befestigungsbolzen 20 am Fahrzeugaufbau lösbar festgesetzt wird.

## Patentansprüche

1. Lösbar befestigbarer Heckaufsatz (2) für ein Kraftfahrzeug mit zwei in einer Gebrauchsstellung (G) hinter den Vordersitzen angeordneten Hutzen (H, H1), wobei der Heckaufsatz (2) in der Gebrauchsstellung (G) aus zwei miteinander entlang einer Mittenebene (a-a) in Fahrzeuglängsrichtung zu einer Einheit verbundenen und am Fahrzeug befestigten Hutzenelementen (3, 4) besteht,
**dadurch gekennzeichnet, dass**
der Heckaufsatz in eine Transportstellung teilbar ausgebildet ist, und dass
die Hutzenelemente (3, 4) in der Mittenebene (a-a) über eine Einhakverbindung (7) lösbar miteinander verbindbar sind, die aus aus im Abstand zueinander angeordneten Hakenelementen mit U-förmigen Hakenleisten (8) an dem einen Hutzenelement (3) und aus im Abstand zueinander angeordneten Einhakleisten (9) an dem weiteren Hutzenelement (4) besteht, die zum Eingriff in die U-förmigen Hakenleisten (8) ausgebildet sind.

2. Heckaufsatz nach Anspruch 1, **dadurch gekennzeichnet, dass** zum Verbinden des Heckaufsatzes (2) mit einer Heckausschnittskante (12) des Fahrzeugs eine Einschubleiste (11) vorgesehen ist, die einen Randbereich der Heckausschnittskante (12) klemmend aufnimmt.

3. Heckaufsatz nach Anspruch 2, **dadurch gekennzeichnet, dass** die Einschubleiste 11i) eine U-profilförmige Aufnahmerinne (13) umfasst und eine hakenförmige Anformung (15) aufweist, und die Einschubleiste (11) mit dem Hutzenelement (3, 4) einstückig verschäumt verbunden ausgebildet ist.

4. Heckaufsatz nach Anspruch 2 oder 3, **dadurch gekennzeichnet, dass** die Einschubleiste (11) abschnittsweise jeweils beidseits der Hutzen (H und H1) vorgesehen ist.

5. Heckaufsatz nach einem der vorhergehenden Ansprüche, **dadurch gekennzeichnet, dass** die Hutzenelemente (3, 4) an ihren der Einhakverbindung abgewandten Seitenteilen (17, 17a) jeweils eine Haltevorrichtung (19) für Spannbolzen (20) aufweisen, die mit fahrzeugseitig angeordneten Lagerkonsolen (21) in Eingriff bringbar sind.

6. Verwendung eines Heckaufsatzes nach einem der vorhergehenden Ansprüche, **dadurch gekennzeichnet, dass** das eine Hutzenelement (3, 4) am Fahrzeug befestigt ist, und das weitere Hutzenelement (3, 4) im Fahrzeug verstaut ist.

## Claims

1. A rear cowl (2), attachable in a releasable manner, for a motor vehicle, having two scoops (**H, H1**) arranged behind the front seats in a position of use (**G**), wherein the rear cowl (2) in the position of use (G) comprises two scoop elements (3, 4) which are connected to each other along a central plane (a-a) in the longitudinal direction of the vehicle so as to form a unit and which are fastened to the vehicle, **characterized in that** the rear cowl is designed so as to be divisible in a transportation position, and the scoop elements (3, 4) are connectable to each other in a detachable manner in the central plane (a-a) by way of a hook-in connexion (7) which comprises hook elements, arranged at a distance from one another and having U-shaped hook strips (8), on one scoop element (3) and hook-in strips (9), arranged at a distance from one another and designed for engaging in the U-shaped hook strips (8), on the further scoop element (4).

2. A rear cowl according to Claim 1, **characterized in that** an insertion strip (11), which receives an edge region of a rear cut-out edge (12) of the vehicle in a clamping manner, is provided in order to connect the rear cowl (2) to the rear cut-out edge (12).

3. A rear cowl according to Claim 2, **characterized in that** the insertion strip 11i) [*sic - recte* (11)] comprises a receiving channel (13) with a U-shaped profile and has a hook-shaped portion (15) formed integrally thereon, and the insertion strip (11) is integrally joined in a foamed manner to the scoop element (3, 4).

4. A rear cowl according to Claim 2 or 3, **characterized in that** the insertion strip (11) is provided locally on both sides of the scoops (**H** and **H1**) in each case.

5. A rear cowl according to one of the preceding Claims, **characterized in that** the lateral parts (17, 17a) of the scoop elements (3, 4) facing away from the hook-in connexion have in each case a holding device (19) for clamping pins (20) which can be brought into engagement with bearing brackets (21) arranged at the side of the vehicle.

6. A rear cowl according to one of the preceding Claims, **characterized in that** one scoop element (3, 4) is fastened to the vehicle and the further scoop element (3, 4) is stowed in the vehicle.

## Revendications

1. Capot de recouvrement arrière (2), pouvant être fixé de manière amovible, pour un véhicule automobile, comportant deux coques (H, H1) disposées dans une position d'utilisation (G) derrière les sièges avant, le capot de recouvrement arrière (2) en position d'utilisation (G) étant constitué de deux éléments de coque (3, 4) reliés entre eux pour former une unité, le long d'un plan médian (a-a) dans la direction longitudinale du véhicule, et fixés sur le véhicule, **caractérisé en ce que** le capot de recouvrement arrière est réalisé de manière à pouvoir être divisé dans une position de transport, et **en ce que** les éléments de coque (3, 4) peuvent être reliés entre eux de façon amovible dans le plan médian (a-a), par une liaison à accrochage (7), laquelle est constituée d'éléments à crochets disposés à distance les uns des autres avec des baguettes à crochets (8) en forme de U sur un élément de coque (3), et de baguettes à crochets (9) disposées écartées les unes des autres sur l'autre élément de coque (4), lesquelles sont conçues pour s'engager dans les baguettes à crochets (8) en forme de U.

2. Capot de recouvrement arrière selon la revendication 1, **caractérisé en ce que** pour relier le capot de recouvrement arrière(2) à un arête de découpe arrière (12) du véhicule, il est prévu une glissière (11) qui reçoit en la serrant une zone de bordure de l'arête de découpe arrière (12).

3. Capot de recouvrement arrière selon la revendication 2, **caractérisé en ce que** la glissière (11) comprend une goulotte de réception (13) profilée en U et présente un bossage (15) en forme de crochet, et la glissière (11) est reliée d'un seul tenant par expansion avec l'élément de coque (3, 4).

4. Capot de recouvrement arrière selon la revendication 2 ou 3, **caractérisé en ce que** la glissière (11) est prévue par endroits sur chacun des deux côtés des coques (H) et (H1).

5. Capot de recouvrement arrière selon l'une des revendications précédentes, **caractérisé en ce que** les éléments de coque (3, 4) présentent chacun, sur leurs parties latérales (17, 17a) tournées à l'opposé de la liaison à accrochage, un dispositif de retenue (19) pour des boulons de serrage (20) qui peuvent être amenés en prise avec des consoles de support (21) disposées sur les côtés du véhicule.

6. Utilisation d'un capot de recouvrement arrière selon l'une des revendications précédentes, **caractérisée en ce qu'**un élément de coque (3, 4) est fixé au véhicule, et l'autre élément de coque (3, 4) est rangé dans le véhicule.
